# EUROPEAN PATENT SPECIFICATION

(11) **EP 0 633 049 B1**
(45) Date of publication and mention of the grant of the patent: **01.09.1999**
(21) Application number: 94890057.6
(22) Date of filing: 11.03.1994
(51) Int. Cl.: B01D 43/00, B01J 19/10

(54) **Method for treating a liquid**
Verfahren zur Behandlung einer Flüssigkeit
Méthode pour le traitement d'un liquide

(30) Priority: 11.05.1993 AT 92693
(43) Date of publication of application: 11.01.1995
(73) Proprietor: Trampler, Felix, Dipl. Ing., 2371 Hinterbrühl (AT); BENES, Ewald, A-2362 Biedermannsdorf (AT)
(72) Inventor: Trampler, Felix, A-2371 Hinterbrühl (AT); Benes, Ewald, A-2362 Biedermannsdorf (AT); Burger, Wolfgang, A-1190 Wien (AT); Gröschl, Martin, A-1020 Wien (AT)
(74) Representative: Babeluk, Michael, Dipl.-Ing. Mag., Patentanwälte Babeluk - Krause

(56) References cited:
- EP-A- 0 147 032
- WO-A-90/05008
- US-A- 4 759 775

## Description

### Field of the Invention

Generally, the present invention is related to a method and to an apparatus to generate ultrasonic resonance fields within a liquid. In more detail the present invention is related to an apparatus for separating particles dispersed in a fluid. It is particularly directed to an apparatus capable of continuously separating dispersed particles with physical properties (especially compressibility, sound velocity, density), different from the fluid, whereby an ultrasonic resonance field is generated within a multilayered composite resonator system including a vessel, a transducer and mirror. Said vessel contains a fluid carrying the particles to be separated. Acoustic radiation force moves the particles towards the nodes or antinodes of the standing wave. Optionally, secondary lateral acoustic forces cause them to aggregate and the aggregates settle by gravity. Numerous fields of modern technology require that particles be removed from fluid. Such separation processes permit either the dispersion medium or particulate matter to be recycled. For example, many industrial processes generate waste water which is contaminated by particulate matter. In Biotechnology, medium has to be separated from biomass. The apparatus is in direct competition to centrifuges and filters, as well as to conventional sedimentation processes using chemical flocculants. The apparatus can also be utilized to sterilize biological matter and for the inactivation of microorganism. In the field of sonochemistry the invention can be applied to accelerate chemical reactions or interactions within the sonicated solution.

### Prior Art

Recently, great effort has been directed at the development of acoustic separation or treatment methods to replace or enhance conventional technologies. The establishment of a standing wave in a fluid results in the formation of velocity nodes or antinodes to which the particles are forced to migrate by the radiation force, depending on their compressibility and density. (Most solid and liquid particles move toward the velocity antinodes.) Nodes and antinode planes are at right angles to the direction of propagation of the sound waves, and the nodes are spaced from adjacent nodes by a distance equal to one-half of the wavelength of the acoustic wave in the dispersion. The aggregating effect of ultrasonic sound within those antinodes is prominently known from literature. From E. Skudrzyk, "Die Grundlagen der Akustik", Springer Verlag, Wien, 1954, S. 202-205, S. 807-825; L. Bergmann "Der Ultraschall und seine Anwendungen in Wissenschaft und Technik", Verlag hirzel, Zuerich, 1954: as well as K. Asai and N. Sasaki, "Treatment of slick by means of ultrasonics", Proceedings of the 3rd International Congress on Coal Preparation, Institut National de l'Industrie Charbonniere, Brussels-Liege, 1958, it follows that the frequency to be used in the applied sound is best chosen to be in the range of the so-called characteristic frequency fₒ, which can be calculated from${\text{f}}_{\text{0}} {\text{= (3η)/(2πr}}^{\text{2}} {\text{) = 0.48η/r}}^{\text{2}} \text{,}$ whereby η constitutes the kinematic viscosity and r the radius of the particle. Using this frequency range, the effect of radiation force and cumulative acoustically induced Bernoulli forces within the antinode planes can be maximized.

According to the U.S. Pat. No. 4,055,491, ultrasonic standing waves are used to flocculate small particles, such as blood or algae cells, within the velocity antinodes of the acoustic field so that they settle out of the carrying liquid by gravity. But the undefined placement of the ultrasonic source and therefore low efficiency of the standing wave field due to undefined resonance boundary conditions result in high energy losses due to a considerable fraction of traveling waves. It appears that the described process is limited to "batch"-operations since a laminar flow can not be achieved in the preferred embodiments. The apparatus presented in the U.S. Pat. No. 5,164,094 mainly improves laminarity of the flow compared to the embodiments described in U.S. Pat. No. 4,055,491. However, a considerable portion of energy is still lost since frequencies of the sound field applied to the vessels carrying the dispersion is are not controlled by well defined resonance boundary conditions.

An embodiment to separate particles with various acoustic qualities is described in the U.S. Pat. No. 4,523,682. A low resonance mode of a vessel containing a dispersion is excited by a relatively small transducer mounted at one end of the vessel, resulting in node and antinode planes perpendicular to the transducer/vessel interface. Perpendicular modes created by the acoustic point source mean that the system cannot be described as a one-dimensional resonator. The fraction of attenuated traveling waves in the longitudinal direction is high compared to the accumulated acoustic energy in the transversal standing wave field. Acoustic attenuation results in a temperature increase within the dispersion along the flow direction. Temperature changes affect sound velocity and resonance frequency, and cause a non homogeneous temperature distribution along the flow direction which decreases the resonance quality of the field. As a result, the treatment period necessary to achieve desired separation is prolonged.

Because of the long acoustic treatment periods necessary to achieve aggregation and sedimentation of the particles captured in the antinode planes, efforts were undertaken to move the antinodes of a standing wave relative to the dispersion, in order to obtain the desired separation effect directly by utilizing acoustic forces alone. U.S. Pat. No. 4,673,512 introduces an interference standing wave field generated by opposing transducers which are excited with the same frequency. By controlling the phase shift between the electric excitation signals of the two acoustic sources, it is possible to move particles trapped within the antinodes or nodes of the traveling interference pattern in the dispersion. Using this method, a relatively short treatment period can be achieved. The disadvantage of this method is its non-resonant nature. Much more energy is used to maintain an interference standing wave field compared to a resonant standing wave field of the same amplitude. The result is high electrical power consumption for producing a given acoustic particle velocity amplitude. The same problem has to be considered in U.S. Pat. No. 4,759,775, in which only the method of creating the traveling interference pattern is different.

U.S. Pat. No. 4,877,516 introduces the idea of the controlled movement of local gradients of the acoustic amplitude of the standing field perpendicular to the direction of sound propagation. Thus, particles are moved within the antinodes or nodes of the field by the Bernoulli-force which is directly related to described gradients and is acting parallel to the antinode planes. The disadvantage of the embodiment is the requirement of mechanically moving array to produce acoustic shadows in order to achieve the desired movement of local gradients of the standing wave.

Stepwise movement of the antinodes of a resonant standing wave by exciting succeeding resonance modes of the resonator system is described in WO-A-90/05008. Although resonance boundary conditions are fulfilled in some of the described embodiments, there is still considerable acoustically induced dissipation due to the resonator frequencies used, which have always been chosen very close to an Eigen-frequency of the transducer in the past.

### Definitions

In order to avoid any misunderstanding in comparing the prior art with the object of the invention, the following definitions are strictly used throughout this description.

*Acoustic particles* are simply the volume-elements of the acoustic continuum theory and must not be confused with the dispersed particles. The *acoustic particle velocity* is the time derivative of the periodic acoustic particle displacement caused by the regarded sound wave.

*One-dimensional* treatment of composite resonators means, that an approximate model is applied, where all quantities are regarded as being exclusively dependent from only one direction (Compare, e. g.: H. Nowotny, E. Benes, and M. Schmid, J. Acoust. Soc. Am. 90 (3), September 1991). This direction is coinciding throughout this description with the longitudinal direction.

The term *layer* is very generally used. Even the liquid is regarded as layer, because only one dimension of the liquid-volume is essential for composite resonators built according to the invention. This essential resonance frequency-determining dimension is usually, but not necessarily, the thickness dimension of the layer. The x-axis of the used coordinates is always chosen in the direction of this essential layer dimension. Since the y- and z-dimensions of the layers are of no relevance (one-dimensional treatment), simply the term *layer dimension* is used for the essential, resonance frequency-determining dimension of the regarded resonator part.

*Active layers* consist of piezoelectric material, *passive layers* consist of non-piezoelectric material.

*Transducer* is in the most simple case a single layer of a piezoelectric material. For many reasons it is advantageous to bond several piezoelectric plates with one or on both sides upon passive, electrically insulating carrier layers. According to the invention, additional transformation (sub)layers may be used. The transducer-layer itself consists in the most general case of a number of solid layers, whereby the piezoelectric layer is contained and the outermost layers are in contact with the surrounding air or the liquid layer(s), respectively.

*Phase shift ϕ* is the spatial phase shift of the acoustic particle velocity V:${\text{ϕ = 2π·f}}_{\text{e}} \text{·x/v}$ where fₑ is the electrical driving frequency, x is the resonance determining dimension of the regarded layer, and v is the sound (phase) velocity of the regarded layer. The total phase shift of a multilayer is the sum of the phase shifts of each layer and the additional phase jumps at the interface planes between adjacent layers with different specific acoustic impedances.

*Harmonic Eigen-frequencies* of a single layer. The harmonic resonance frequencies or harmonic Eigenfrequencies fᵢ of a layer are defined by${\text{f}}_{\text{i}} {\text{= i·(c/ρ)}}^{\text{½}} \text{/(2·x)}$ where i is the number of the regarded harmonic frequency, x is the resonance determining dimension, c the effective elastic constant, and ρ the mass-density of the layer.

If the layer is consisting of an electroded piezoelectric material, the effective elastic constant c in equation (III) depends upon the electrical load between the electrodes. For the limit cases of short-circuited and open-loop electrodes, the so called series or parallel Eigen-frequencies are determined, respectively. Only an odd subset of the Eigenfrequencies fᵢ can be electrically excited.

The *half value bandwith* of an Eigen-frequency or resonance frequency is a frequency-range determined by a lower frequency and a higher frequency at which the electrical active power consumption of the regarded layer (or the multilayered structure respectively) is half the value of the active power consumption of the regarded Eigen- or resonance frequency.

*Quasi-harmonic Eigen-frequencies* of a multilayer (e.g. a multilayered transducer). While the overtone-frequencies of a single homogeneous layer are integer multiples of the fundamental Eigen-frequency, the overtone-frequencies of a composite resonator are in general not that trivially spaced. For that reason, the Eigen-frequencies of a one-dimensional composite resonator are sometimes called "quasiharmonic resonance frequencies". (Compare, e. g.: E. Benes, J. Appl. Phys., Vol. 56, No. 3, 1 August 1984). However, in the case of one layer with dominating dimension (dispersion layer), in a first approximation also the high overtone composite frequencies may be regarded as equidistant. Since a transducer according to the invention usually consists of more than one single layer, it is a multilayered resonator itself. For such a resonator, the Eigen-frequencies can be defined as the frequencies for which the phase shift ϕT of the acoustic particle velocity amplitude along the dimension x_{T} of the transducer between the outermost planes is equal to an integer multiple n of the number π. Not all of these mechanically possible resonance frequencies are piezoelectrically excitable. The excitability depends on the displacement curve along the active layer alone. If this curve is a symmetric one, the transducer is not excitable at the corresponding frequency. This definition of the electrically excitable Eigen-frequencies of a multilayered transducer corresponds with the measurable resonance frequencies, if the transducer is surrounded by vacuum (or air) and the frequency of the driving electrical power generator is tuned to the relative maxima of the electrical active power consumed by the resonator. If the voltage amplitude Uₑ of the driving power generator is kept constant (very low electrical source impedance), the so called series resonance frequency of the composite structure is determined. If the current amplituce Iₑ of the driving power generator is kept constant (very high electrical source impedance), the so called parallel resonance frequency of the composite structure is determined.

*Longitudinal direction* means the direction of the layer dimension. The longitudinal direction coincides with the propagation direction of the sound wave excited by the transducer layer. According to the present invention, resonance modes of the composite resonator are excited in longitudinal direction. Therefore, the direction of the standing resonance wave is referred to as longitudinal direction.

*Transversal directions* are directions perpendicular to the longitudinal direction. These directions fall in the particle velocity node and antinode planes.

*Specific acoustic impedance* Z is the acoustic impedance per cross sectional area of the regarded material.

### Objects and Description of the Invention

According to the preferred embodiments, the multilayered composite resonator system consists of a plane transducer, a vessel containing a liquid to be treated and a plane acoustic mirror. All acoustically coupled layers are arranged in longitudinal direction and their surfaces are parallel to each other. The transducer may consist of a piezoelectrically active layer, such as PZT (Lead-Zirconate-Titanate) ceramics or Lithium-Niobate monocrystals or PVDF layers, and a solid passive layer acting as carrier of the active layer. The invention is suitable to sonicate solutions and dispersions in order to accelerate physical interactions, biological processes, or chemical reactions between their containts and especially to separate dispersed particles of sizes ranging from 10⁻³ to 1 mm. Preferred resonance frequencies according to acoustic and geometric properties of the particles range from 0.1 to 10 MHz.

The main object of the invention is to provide an ultrasonic resonance field within the liquid layer of a multilayered composite acoustic resonator, capable of separating and recycling particles from fluid or of conducting other treatments, while minimizing electrical power consumption and temperature increase caused by acoustically induced dissipation. Many potential applications for ultrasonic separation processes, especially in biotechnology, require a separation method, where temperature increase is negligibly small in order to avoid thermal damage to the particles. Furthermore, the accumulated energy of the established acoustic resonant field and therefore the the acoustic treatment time required for the desired acoustically induced physical or chemical process depend on a homogeneous temperature distribution. This is because the wavelength of an acoustic wave depends on temperature; undesired spatial temperature gradients in transversal directions result in a non-homogeneous distribution of the total phase shift of the acoustic wave. Defined and constant total phase shift distribution in transversal directions of the composite resonance system is a boundary condition for maintaining high quality resonance fields in longitudinal direction.

As a result of the present invention, the loss characterizing figure ${\text{R = W}}_{\text{e}} {\text{/E}}_{\text{S}} {\text{= P}}_{\text{e}} {\text{·τ}}_{\text{Cj}} {\text{/E}}_{\text{S}}$ is minimized. The loss figure R is hereby defined as ratio between the active electrical energy consumption Wₑ (per period τ_{Cj} = 1/f_{Cj}) of the composite resonator system and the reactive accumulated acoustic energy E_{S} of the resonance field in the fluid; f_{Cj} is the excited quasi-harmonic resonance frequency of the composite resonator. Pₑ describes the active (root mean square) electrical power input,${\text{P}}_{\text{e}} {\text{= ½U}}_{\text{e}} {\text{I}}_{\text{e}} \text{cosφ,}$ whereby Uₑ, Iₑ are the amplitudes of the driving voltage and current, respectively, φ is the phase between both.

The accumulated acoustic energy E_{S} is directly related to the acoustic forces acting on the particles, whereby the energy consumption Wₑ compensates for attenuation of the acoustic field causing thermal dissipation. A small portion of Wₑ also represents dielectric losses of the transducer, which are of no relevance to the present invention and will not be mentioned further.

We have found that acoustically induced thermal dissipation of transducer and mirror can be minimized by exciting an acoustic quasi-harmonic composite resonance frequency f_{Cj} of the total resonator, but simultaneously mismatching the driving frequency fₑ with any of the electrically exiteable quasiharmonic Eigen-frequencies f_{Ti} of the transducer as well as with any of the Eigen-frequencies f_{Mk} of the mirror. As a consequence, the characterizing loss figure R is significantly reduced. This mismatching between driving frequency and Eigenfrequency of the transducer is not at least obvious, since in the mismatched case the composite resonator shows a rather poor electrical behaviour. E. g., in the locus of electrical admittance curves, the composite resonances, which are represented by circles, are much less recognizeable. The resonance circles appear to be much smaller and are offset from the real axis. Because of these properties, in the general case it is much more difficult to design an electrical driving electronics for maintaining a resonance excitation offside a transducer Eigen-frequency. For that reason, in the past the excitation of a composite resonator has been performed always close to the fundamental or third quasiharmonic Eigen-frequency of the transducer.

Composite resonance frequencies f_{Cj} result from the boundary condition at the terminating, total reflecting surfaces of a composite resonator for a standing wave, whereas the maximum of the acoustic particle velocity amplitude has to coincide with this terminating planes. Therefore, the total phase shift φ_{C} across the total length x_{C} of a multilayered composite resonance system in longitudinal direction, including all layers, has to be an integer multiple of the number π. Mismatching between the electrical driving frequency fₑ and the Eigen-frequencies f_{Ti} of the transducer layer can be obtained for a given driving frequency either by proper chosing the transducer thickness x_{T} and its relative position within the multilayered resonator, or by directly chosing the driving frequency equal to a composite resonance frequency which is sufficiently offset from any excitable Eigen-frequency of the transducer. In the most general case the offset is sufficient if the driving frequency is chosen outside of any of the half value bandwiths of the Eigenfrequencies f_{Ti} of the transducer. In the preferred embodiment of the invention, the offset is sufficient, if it is chosen higher than a certain minimum offset. The minimum offset is equal to 10% divided by the quasiharmonic number i of the regarded Eigen-frequencies f_{Ti} of the transducer:${\text{0 < f}}_{\text{e}} {\text{< [0.9 f}}_{\text{T1}} {\text{] ; [1.1 f}}_{\text{T1}} {\text{] < f}}_{\text{e}} {\text{< [(1-0.1/2) f}}_{\text{T2}} {\text{] ; [(1+0.1/2) f}}_{\text{T2}} {\text{] < f}}_{\text{e}} {\text{< [(1-0.1/3) f}}_{\text{T3}} {\text{] ; [(1+0.1/3) f}}_{\text{T3}} {\text{] < f}}_{\text{e}} {\text{< [(1-0.1/4) f}}_{\text{T4}} {\text{] ;[(1+0.1/4) f}}_{\text{T4}} {\text{] < f}}_{\text{e}} \text{< ....}$

Introducing this mismatching, the coincidence of the maxima of the acoustic particle velocity amplitude with both outermost transducer planes is avoided. The characterizing loss figure R is optimized, if the thickness x_{T} and relative position of the transducer layer being chosen with regard to the driving frequency fₑ in such a way that a vanishing acoustic particle velocity amplitude V in the interface plane between transducer and the liquid is obtained. In this preferred case, the mismatching between the driving frequency fₑ and all the excitable Eigen-frequencies f_{Ti} of the transducer is maximal and the driving frequency fₑ is approximately in the middle of one of the allowed intervals defined in equation (V).

Similar rules are valid for the mirror layer. The thickness x_{M} of the mirror layer has to be properly chosen in order to avoid excitation of its Eigenfrequencies f_{Mi}. The relative position of the mirror layer, however, is fixed as terminating reflecting layer of the multilayered resonator. Generally, the mirror may also consist of several layers.

The transducer layer may form a terminating layer of the composite resonator. Furthermore, the transducer layer may consist of a piezoelectrically active layer, such as PZT (Lead-Zirconate-Titanate, Pb(Ti,Zr)O₃) ceramics, or Lithium-Niobate (LiNbO₃) monocrystals, or PVDF (Polyvinylidene Fluoride) polymers, and a solid passive layer acting as a carrier of the active layer with defined thickness to achieve low acoustically induced thermal dissipation. Best results can be achieved by using a carrier material with low acoustic attenuation and with a specific acoustic impedance Z_{B} in the range of or higher than the specific acoustic impedance Z_{A} of the piezoelectrically active layer. The thickness x_{A} of the active layer is preferably of a value which causes a phase shift φ_{A} close to or equal to an odd multiple m of the number π. The thickness of the passive layer x_{B} is preferably of a value which causes a phase shift φ_{B} being close to or equal to an odd multiple of half of the number π. Using these criteria, the acoustic particle velocity amplitude at the transducer/liquid interface approaches zero and the boundary condition for exciting an Eigen-frequency f_{Ti} of the transducer is optimally avoided. As a result, we have found that energy dissipation of the transducer is minimized. Besides that, for this preferred arrangement, there is no decrease of excitability compared to the case of matching the driving frequency and one of the Eigen-frequency of a transducer.

The transducer layer can also be positioned between two liquid layers. In that case, the thickness x_{A} of the active layer is preferably of a value which causes a phase shift φ_{A} close to or equal to an odd multiple m of the number π. The thicknesses of the passive layers x_{B}, x'_{B} (if any) on each side of the transducer are preferably of values which cause phase shifts φ_{B} φ'_{B} being close to or equal to an odd multiple n, n' of half of the number π, respectively. Furthermore, the thicknesses of the liquid layers x_{S}, x'_{S} and mirror layers x_{M}, x'_{M} on each side of the transducer have to be chosen, so that the acoustic particle velocity amplitude at both transducer/liquid interfaces approaches zero and the boundary condition for exciting an Eigen-frequency f_{Ti} of the transducer is maximally avoided. As a result, we have found that energy dissipation of the transducer is minimized. Preferably, the thicknesses x_{B}, x'_{B} of the passive layers are equal and the layers are made of the same material.

An odd multiple q of passive sublayers, each of a thickness x_{B,k} (k = 1.....q) causing a phase shift φ_{B,k} as described above for the thickness x_{B} of a single passive layer, with alternating high (in the range of the active layer) and low (in the range of the liquid) acoustic impedance, but starting and ending with high ones, is useful to further reduce energy dissipation when this ensemble of sublayers is arranged between the active layer and the liquid layer. Alternatively, low-impedance sublayers can also be formed by a liquid with low acoustic attenuation, optionally circulating in order to control temperature.

Since the frequencies f_{Cj} of the resonance modes of the composite system vary with temperature of the liquid and if applicable the particle concentration it is of significance to compensate the exciting frequency fₑ for resonance frequency drifts in order to maintain constant conditions according to the aim of the invention. This can be achieved by controlling the fine tuning of the exciting frequency fₑ by an automatic frequency control (AFC) which maintains the active electrical power consumption Pₑ of the composite resonator at a relative maximum as criterion for resonance.

Another approach to control the exciting frequency fₑ towards a preferred resonance frequency f_{Cj} is to provide an additional active layer (e.g. PZT ceramics, Lithium-Niobate monocrystals, or PVDF layers) as mirror or as part of a composite mirror and to utilize the amplitude of the acoustically induced electrical signal at the electrodes of this said active layer as control criterion for maintaining the excitation of the chosen composite resonance frequency f_{Cj}.

Similar to the thicknesses of the layers of a composite transducer, the thicknesses of the piezoelectrically active and passive layers of a composite mirror are advantageously chosen so that the acoustic particle velocity amplitude at the mirror/liquid interface approaches zero and the boundary condition for exciting an Eigen-frequency f_{Mk} of the mirror is optimally avoided. As a result, we have found that energy dissipation of the mirror is minimized for a given acoustic particle velocity amplitude in the fluid.

Analogous to the sublayers of a transducer as described above, sublayers can be introduced in a composite mirror layer. An odd multiple q of passive sublayers of a composite mirror, each of a thickness x_{B,k} (k = 1.....q) causing phase shifts φ_{B,k} as described above for a transducer, arranged between active layer of the mirror (if any) and fluid layer, with alternating high (in the range of the active layer) and low (in the range of the liquid) acoustic impedance, but starting and ending with high ones, can be used according to the invention to further lower energy dissipation.

### Brief Description of the Drawings

FIG.1 shows the interpretation of the composite resonator as multilayered one-dimensional structure and the course of the resulting acoustic particle velocity amplitude, if the layer dimensions are chosen according to the invention,
FIG.2 shows a version of FIG. 1 with the transducer in between,
FIG.3 shows the schematic of a simple resonator example,
FIG.4 shows a composite resonator with a wave guide layer,
FIG.5 shows the cross section of a composite resonator using a totally reflecting mirror as resonator termination,
FIG.6 is a preferred symmetric version of the resonator according to FIG.5,
FIG.7 shows an example of a transducer layer according to the invention,
FIG.8 shows a preferred frequency interval in which the driving frequency should be chosen.

### Detailed Description of the Embodiments and Two Typical Dimensionings

In order to emphasize the essential parts of the embodiments, the layers are labeled with alpha-characters, while all other parts are labeled with numbers.

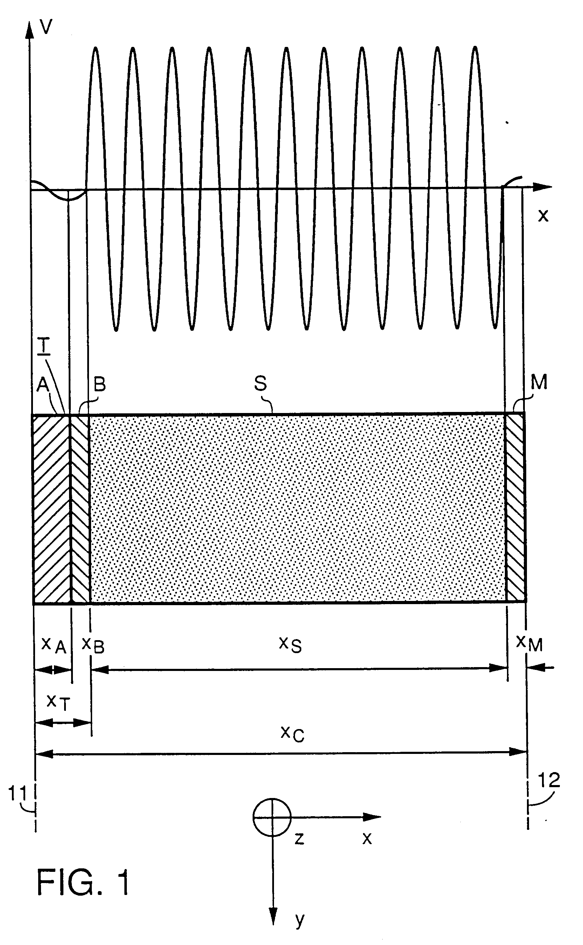

The lower section of **FIG.1** shows a schematic of the essential parts and dimensions of a typical piezoelectric composite one-dimensional resonator. The transducer layer **T** on the left side preferably consists of an active piezoelectric layer **A** and a passive, electrically isolating, carrier layer **B**. The corresponding layer dimensions are x_{T}, x_{A} and x_{B}, respectively. The transducer is acoustically coupled with the liquid **S**; the liquid layer dimension is x_{S}. Finally, the resonator is completed by the mirror layer **M** with thickness x_{M}. Since the composite resonator is surrounded by air with a specific acoustic impedance being some order of magnitudes lower than the acoustic impedance of any solid body, the ultimate terminating reflecting planes are the outside planes **11**, **12** of the transducer layer and the mirror layer, respectively. Thus, the total length x_{C} of the composite structure is defined between these terminating planes. In the upper section of **FIG.1** the spatial course of the acoustic particle velocity amplitude V along the longitudinal direction x is plotted. If the dimensions, the specific acoustic impedance of the layers as well as the electrical driving frequency fₑ are chosen according to the invention, the maximum amplitudes in the liquid are, as indicated, much higher than the maximum amplitudes in the other layers. **FIG.1** shows this amplitude relationship only schematically. The quantitative ratio of the maximum amplitude of the standing resonance wave in the liquid to the maximum amplitude in the transducer is usually higher than indicated in **FIG.1**.

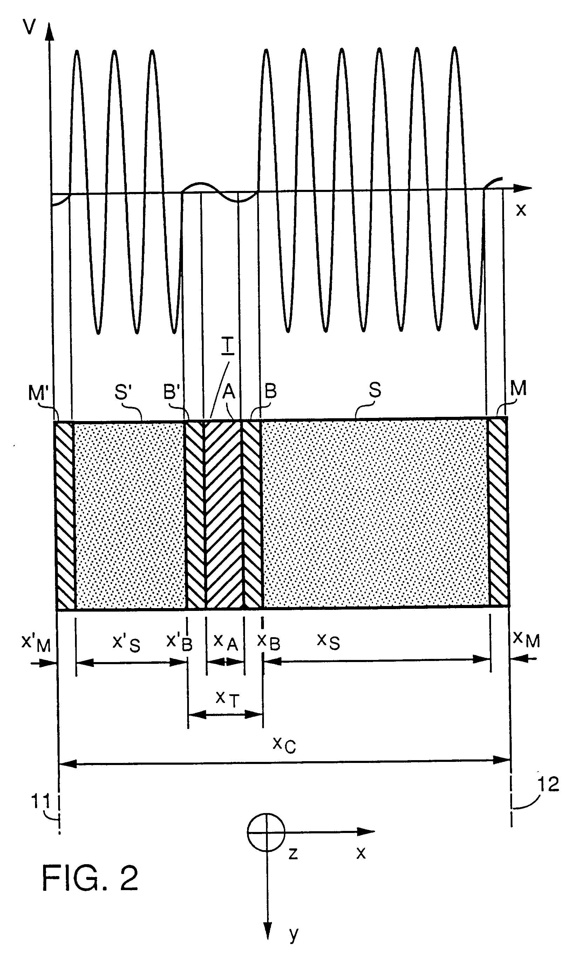

The lower section of **FIG.2** shows a schematic of the essential parts and dimensions of a typical one-dimensional piezoelectric composite resonator with the transducer **T** not only coupled to a first liquid layer **S** with the dimension x_{S} on the right side, but also coupled to a second liquid layer **S'** with the dimension x'_{S} on the left side. The second liquid layer **S'** may also serve only as coolant or be simply a waveguide layer (e. g. water). The transducer layer **T** preferably consists of an active piezoelectric layer **A** and two passive, electrically isolating, carrier layers **B** and **B'** on both sides of the active layer **A**. The corresponding layer dimensions are x_{T}, x_{A}, x_{B}, and x'_{B}, respectively. The transducer is acoustically coupled with the liquid layers **S**, **S'**, respectively. Finally, the resonator is completed on each side by a first mirror layer **M** with thickness x_{M} on the right side, and by a second mirror layer **M'** with the thickness x'_{M} on the left side. Since the composite resonator is surrounded by air with a specific acoustic impedance being some orders of magnitude lower than the acoustic impedances of any solid body, the ultimately terminating reflecting planes are the outside planes **11**, **12** of the mirror layers **M'**, **M**, respectively. Thus, the total length x_{C} of the composite structure is defined between these terminating planes **11**, **12**. In the upper section of **FIG.2** the spatial course of the acoustic particle velocity amplitude V along the longitudinal direction x is plotted. If the dimensions, the specific acoustic impedance of the layers as well as the exciting frequency fₑ are chosen according to the invention, the maximum particle velocity amplitudes in the liquid layers are, as indicated, much higher than the maximum amplitudes in the other layers.

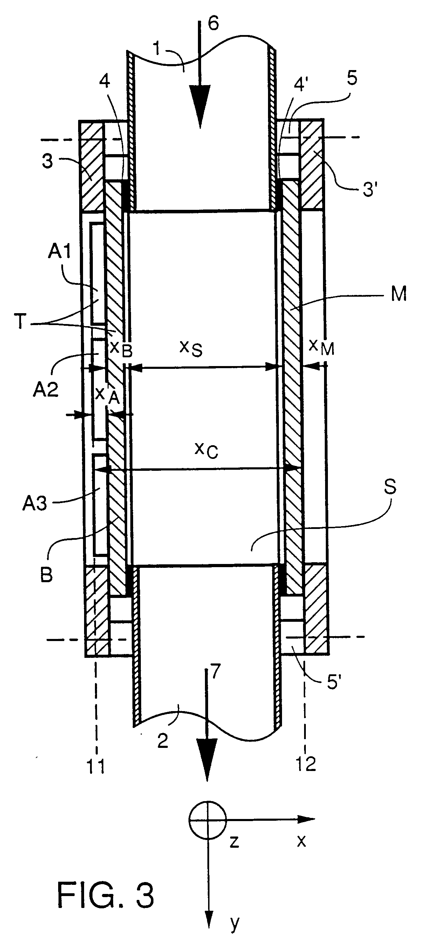

**FIG.3** shows the schematic of a simple resonator. In this example, the piezoelectric layer is represented in y-direction by three piezoceramic plates or discs **A1**, **A2**, **A3** of an equal thickness x_{A}, arranged side by side and provided with electrodes. The plates **A1**, **A2**, **A3** are acoustically working parallel (in phase excited), while they are electrically connected in series. The plates **A1**, **A2**, **A3** are bonded to a carrier plate **B** (e.g. glass or Al₂O₃-ceramic) with thickness x_{B} and can be treated in good approximation as one continuous layer **A** with thickness x_{A}. The flow direction **6**, **7** of the liquid **S** is in direction y. If the apparatus is used for the separation of particels dispersed in a fluid, the dispersed particels are driven by the acoustic radiation forces in longitudinal direction towards the antinode planes of the acoustic particle velocity, where the dispersed particles are agglomerated. The agglomerations are dragged by the gravity forces pointing downwards in direction z (enforced sedimentation by acoustically stimulated coagulation). The carrier plate **B** and the mirror plate **M** simultaneously perform as walls of the liquid vessel. The rectangular cross-sectioned entrance **1** and exit **2** pipes are made tight to the carrier plate **B** and the mirror plate **M** via Viton®-rubber stripes **4** an **4'** respectively. The distance (x_{B} + x_{S} + x_{M}) is precisely determined by the distance-rods **5** and **5'** and the flanges **3**, **3'**.

For example, the essential dimensioning of two resonators according to the invention is as follows:

For the separation of biological cells with diameters of the order of 10 µm the appropriate driving frequency fₑ is typically around 2 MHz which is signifcantly higher than the characteristic frequency given by equation (I) in order to avoid cavitation. As standard piezoceramic plates are chosen:

### Piezoelectrically active layer A:

- Material:: PZT Lead-Zirconate-Titanate, Pb(Ti,Zr)O3 piezoceramic Hoechst Sonox P4
- Mass density:: ρ_{A} = 7800 kg/m³
- Effective sound velocity for shortened electrodes:: v_{A} = 3950 m/s
- Specific acoustic impedance:: Z_{A} = 30.8·10⁶ kg/m²s
- Thickness:: x_{A} = 1 mm

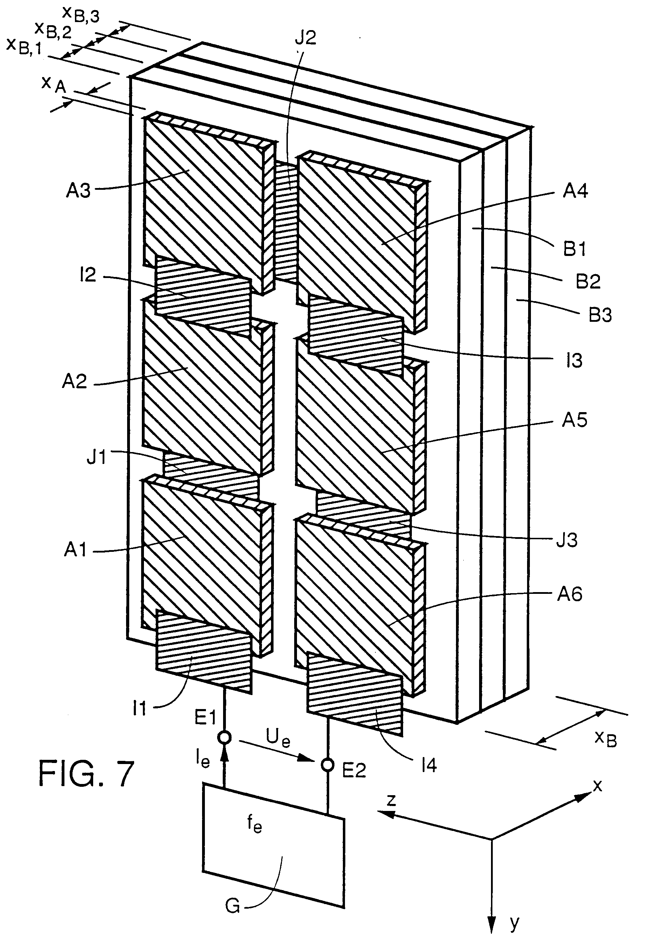

The fundamental series resonance frequency can be determinded from equation (III): f_{A}= 1.97 MHz. The series resonance frequency is relevant, because the driving electronics G is assumed to be of the usual low source impedance type. Six (2 x 3) square plates with 25 mm x 25 mm face dimensions are bonded upon a passive layer B (compare also Fig. 7), the thickness value x_{B} of this passive layer is chosen equal to a standard glass thickness:

### Piezoelectrically passive layer B:

- Material:: Tempax glass
- Mass density:: ρ_{B} = 2200 kg/m3
- Sound velocity:: v_{B} = 5430 m/s
- Spec. ac. impedance:: Z_{B} = 12·10⁶ kg/m²s
- Thickness:: x_{B} = 2.8 mm

The resonance frequencies of the two-layer transducer surrounded by environmental air can be measured or calculated (E. Benes, J. Appl. Phys., Vol. 56, No. 3, 1 August 1984). The first four quasiharmonic frequencies are:${\text{f}}_{\text{T1}} {\text{= 573500 Hz, f}}_{\text{T2}} {\text{= 1371400 Hz, f}}_{\text{T3}} {\text{= 1958120 Hz, f}}_{\text{T4}} \text{= 2546390 Hz.}$

According to equation (V) the advantageous intervalls for the driving frequency fₑ are:${\text{0 Hz < f}}_{\text{e}} {\text{< 516150 Hz ; 630850 Hz < f}}_{\text{e}} {\text{< 1302830 Hz ; 1439970 Hz < f}}_{\text{e}} {\text{< 1892849 Hz; 2023391 Hz < f}}_{\text{e}} \text{< 2482730 Hz ;....}$

The liquid layer dimension x_{S} depends for instance on the flow rate required and is chosen to be 25 mm:

### Liquid layer S:

- Material:: Hydrosol
- Mass density:: ρ_{S} = 1000 kg/m³
- Sound velocity:: v_{S} = 1500 m/s
- Spec. ac. impedance:: Z_{S} = 1.5·10⁶ kg/m²s
- Thickness:: x_{S} = 25 mm

### Mirror layer M:

- Material:: Tempax glass
- Mass density:: ρ_{M} = 2200 kg/m³
- Sound velocity:: v_{M} = 5430 m/s
- Spec. ac. impedance:: Z_{M} = 12·10⁶ kg/m²s
- Thickness:: x_{M} = 1.3 mm

These Parameters result in resonance frequencies f_{Cj} of the composite resonator with a distance Δ f_{Cj} of approximately 26 kHz. Therefore, there are many composite resonance frequencies falling into the advantageous intervalls. E. g., the first resonance frequencies f_{Cj} in the fourth intervall is 2035555 Hz, the second 2061024 Hz, the third 2087140 Hz; thus, the exciting frequency fₑ can be chosen for instance to be equal to 2087140 Hz. Since the fundamental Eigen-frequency of the mirror is 2088460 Hz, the selected driving frequency is not sufficiently mismatched to the mirror resonances, as a consequence, the mirror thickness has to be changed, e. g. to 1.8 mm.

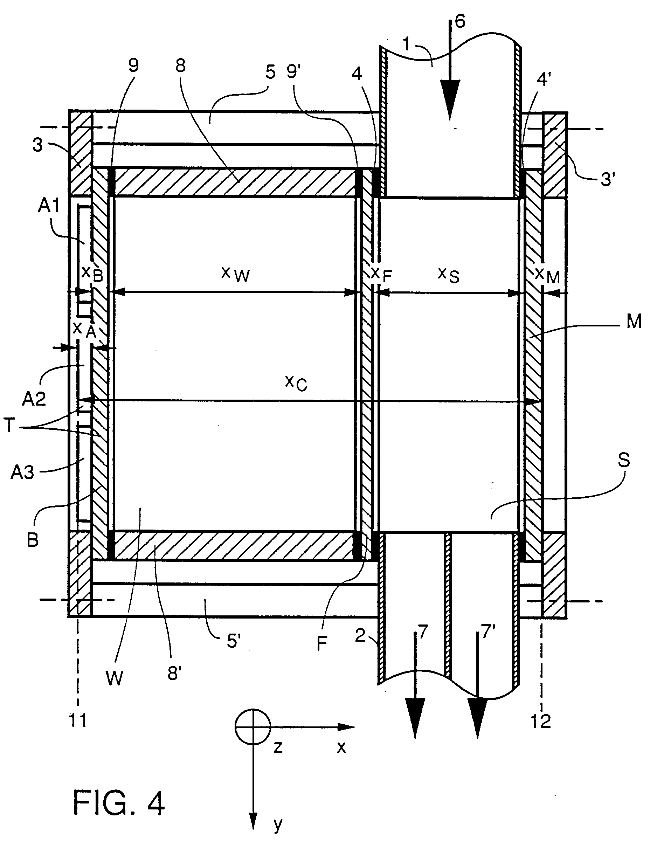

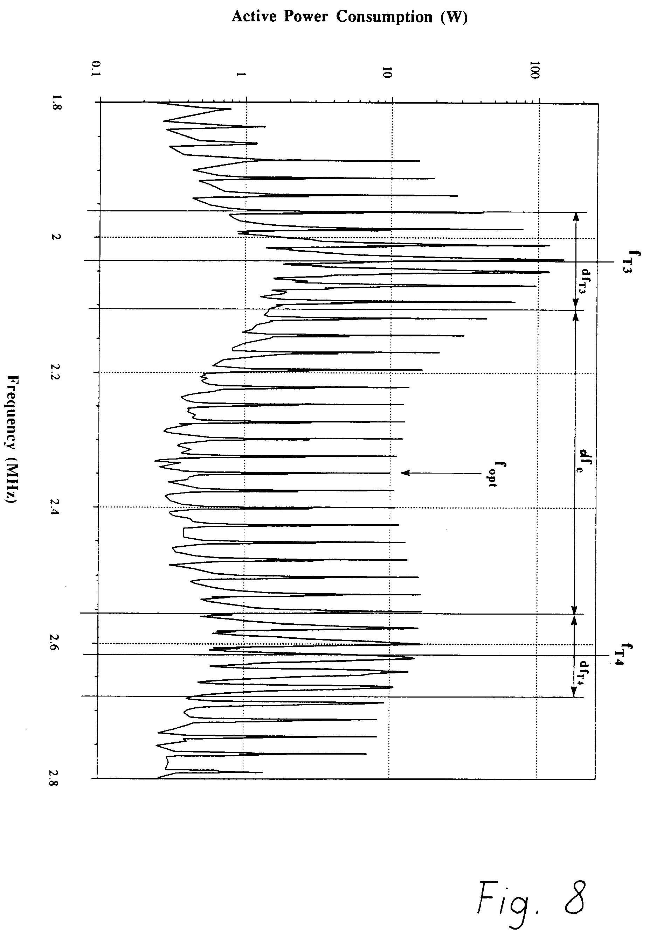

**FIG. 8** shows the measured resonance spectrum of electrical active power input versus frequency of a typical resonator. Dimensionings have been chosen mainly according to the example previously described except that the thickness x_{B} of the passive layer **B** is now 2.7 mm instead of 2.8 mm. As a result the third and fourth Eigen-frequencies **f**_{**T3**} and **f**_{**T4**} of the Transducer have slightly been increased to 2.035 MHz and 2.620 MHz respectively. Each peak of the plot represents a high overtone resonance frequency of the resonator system; the Eigen-frequency spectrum of the transducer alone can exactly be determined by remeasuring the electrical active power consumption without the resonator volume **S** filled with liquid. The Eigen-frequencies **f**_{**T3**} and **f**_{**T4**} can also be localized in good aproximation in **FIG.4** by interpretation of the local minima of active power input between each resonance peaks of the complete resonator system as an indicator for the amount of active power consumed by the tranducer if the influence of Eigen-frequencies of the mirror can be neclected. **df**_{**T3**} and **df**_{**T4**} represent frequency intervals in the neighborhood of the Eigenfrequencies which are usually broader than the half value-bandwiths of the regarded Eigenfrequencies of the transducer. Excitation frequencies are chosen within these half value-bandwiths to drive resonators of the prior art due to the high excitability of resonance frequencies in that area. In contrast to these disadvantageous intervals **df**_{**T3**} and **df**_{**T4**}, the frequency interval **df**_{**e**} represents the preferred frequency range in which a resonance frequency should be chosen according to the invention and to equation (V). **f**_{**opt**} is located in the middle of the preferred interval **df**_{**e**} and indicates the frequency area in which a vanishing acoustic particle velocity amplitude at the interface between transducer and liquid is optimally achieved according to the invention.

A design which is optimal with respect to the object of the invention uses, except the passive layer **B**, the same layers. The passive layer **B** is made of a thickness **x**_{**B**} that produces a node of the particle velocity amplitude V at the interface transducer/liquid. If the driving frequency **f**_{**e**} is selected to be about the Eigen-frequency **f**_{**A**} of the active layer **A**, which guarantees optimal excitation of the composite resonator, the phase shift ϕ_{A} in the active layer **A** is equal to π. Since there is an antinode boundary condition at the interface plane **11** between active layer **A** and surrounding air, and since the phase shift ϕ_{A} in the active layer **A** is equal to π, the phase shift ϕ_{B} in the passive layer **B** must be chosen to be equal to π/2 or equal to an odd multiple of π/2 to obtain a node of the particle velocity V at the interface plane between transducer **T** and liquid **S**. Introducing this phase shift π/2 in equation (II) yields${\text{ϕ}}_{\text{B}} {\text{= 2π·f}}_{\text{e}} {\text{·x}}_{\text{B}} {\text{/v}}_{\text{B}} \text{= π/2}$ and allows the calculation of x_{B}. If for a more rugged application the result of X_{B} = 1.2 mm is mechanically to weak, three times the value can also be used.

### Piezoelectrically passive layer B:

- Material:: Alumina (Al₂0₃) ceramic
- Mass density:: ρ_{B} = 3780 kg/m³
- Sound velocity:: v_{B} = 9650 m/s
- Specific acoustic impedance:: Z_{B} = 36.5·10⁶ kg/m²s
- Thickness:: x_{B} = 1.2 mm

The first two Eigen-frequencies of this transducer are: f_{T1} = 1335150 HZ, f_{T2} = 2866080 Hz.
According to equation (V) the intended driving frequency fₑ = 1,97 MHz is now approximately in the middle of the advantageous intervall: 1468665 Hz < fₑ < 2722776 Hz.

In this example the optimum thickness for the mirror is determined from (II)${\text{ϕ}}_{\text{M}} {\text{= 2π·x·f}}_{\text{e}} {\text{/v}}_{\text{M}} \text{= π/2;}$ x = 0.692 mm. Since this value is rather to small for a reasonable mechanical ruggedness, three times this value is chosen x_{M} = 2.07 mm.

Similar to the composite transducer **T**, the mirror **M** may also consist of a active **A** and a passive **B** layer with the same criteria for choosing the thicknesses **x**_{**A**} and **x**_{**B**} of such layers, respectively. The active layer of the mirror provides an electric signal, which can be used to automatically control the exciting frequency fₑ towards a preferred composite resonance frequency f_{Cj}.

**FIG.4** shows an extension of the composite resonator according to **FIG.3**. In this example, an additional wave guide layer **W**, filled with a low loss liquid (e.g. distilled water), separated by an acoustically transparent wall **F** from the liquid **S**, is inserted. The dimension **x**_{**F**} of the wall **F** is, with respect to the excitation frequency fₑ, either small compared to a quarter of the wavelength or equal to the half-wavelength or a multiple of the halfwavelength in that wall material, or the specific acoustic impedance of the wall material is approximately the same as the specific acoustic impedance of the liquid. In the first case, e.g. Saran® or Mylar® foils with a thickness of 10µm are used as wall **F**. In the second case, the wall **F** can be made virtually of any material, but for a material with a specific acoustic impedance close to the specific acoustic impedance of the liquid **S**, the dimension of the layer **F** is less critical. Using the phase-nomenclature, the acoustically transparent layer **F** produces a phase shift ϕ_{F} of an integer multiple of π. In the third case, a proper material is e. g. TPX (Methylpentene) or ABS (Acrylonitrile Butadiene Styrene). Due to the uncritical effect of its layer thickness and its low attenuation Polysulfon foils have been found to be an advantageous material to form wall layer **F**. The additional wave guide layer **W** serves as a high quality factor resonator part, which removes the very inhomogeneous near field region of the transducer **T** from the treatment zone **S**, thus significantly reducing the potential for acoustic streaming in the liquid **S**. This resonator design version allows also an enhanced cooling and a temperature control of the system by circulating a liquid between the wave guide layer layer **W** and a thermostat. In this case the side walls **8** and **8'** can be equipped with an entrance and exit pipe, respectively. This resonator design version also proofs the applicability of this invention to the so called drifting resonance field (DRF) concept described in WO-A-90/05008. In the case of the DRF separation procedure, the composite resonator is not only driven at one certain harmonic resonance frequency, but is rather switched repeatedly between, e. g. five to twelve, adjacent, closely spaced resonance quasi-harmonic frequencies f_{Cj}. Particles dispersed in the liquid **S** are moved in a stepwise manner as a result of movements of the antinode planes in longitudinal direction x. This allows the splitting of the dispersion exit pipe **2** into two parts, one **7** for the clarified liquid medium, the other **7'** for the liquid medium highly enriched in dispersed particles. To minimize acoustically induced dissipation, the exciting frequencies of the DRF procedure have to be tuned towards resonance frequencies in the neighborhood of preferred resonance frequencies f_{Cj} according to the invention.

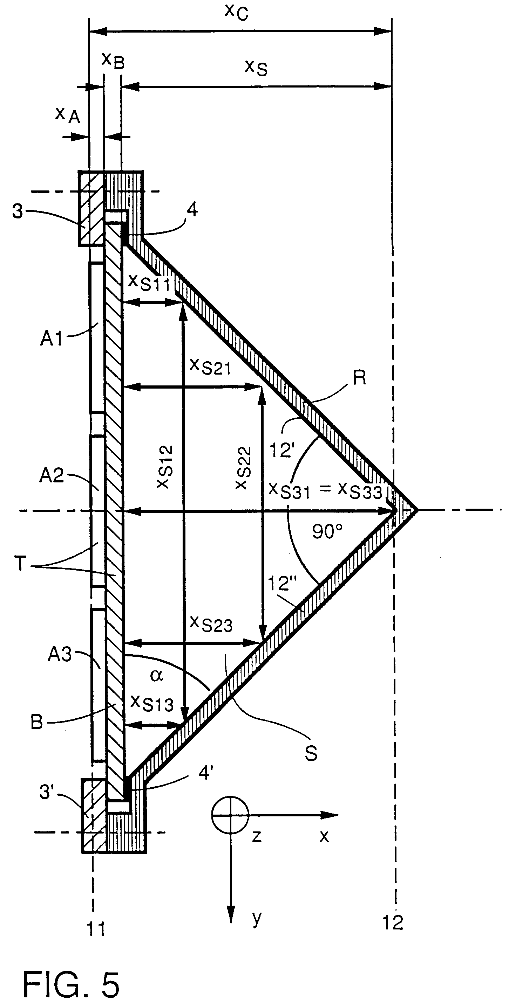

**FIG.5** shows the cross section of a composite resonator using a totally reflecting retro-reflector **R** as mirror terminating the composite resonator. Said retro-reflector **R** is preferably formed by two plates at right angle to each other. The orientation of the flow of the liquid **S** is preferably chosen opposite to the orientation of the force of gravity and coincides in **FIG.5** with the z-axis. This resonator version is especially advantageous, since there are no side walls engaged which have to be ignored or neglected with respect to their acoustic influence in order to allow a one-dimensional treatment. In contrast to that, a well defined one-dimensional behavior of resonators according to **FIG.3** and **FIG.4** can often only be obtained, if the lateral dimensions of the layers are much higher than the longitudinal ones, which is sometimes not desirable.

The acoustic material parameters of the retro-reflector **R** must be of a value so that the total reflection condition at the interface between liquid **S** and reflector **R** is fulfilled for the tilt-angle α of the reflector being equal 45°. Total reflection at the interface-planes **12'**, **12''** between liquid and retro-reflector disables any acoustically induced dissipation in the reflector **R**. If the medium of the reflector **R** is chosen isotropic having a value of the sound speed for shear waves equal to or higher than 1.41 times the sound speed for longitudinal waves in the liquid **S**, the limit angle for the total reflection condition at the interface between liquid **S** and reflector **R** is exceeded for the tilt-angle α of the reflector being equal to 45°. (In the case the reflector **R** is made from an anisotropic medium, the lower of the two possible shear-wave sound speeds must be equal to or higher than 1.41 times the sound speed for longitudinal waves in the liquid **S**). That is, the excited sound waves are, for the case of neglected losses within the media, totally reflected already at the interface-planes **12'**, **12''** between liquid and reflector. This condition is fulfilled, e.g. for an aqueous liquid and the reflector wall materials Molybdenum, stainless steel and even for the wall material Aluminum. Although the actual sound paths along the distances **x**_{**S12**} and **x**_{**S22**} are now falling parallel to the y-axis, the total length of any sound path in the liquid is equal:${\text{(x}}_{\text{S11}} {\text{+ x}}_{\text{S12}} {\text{+ x}}_{\text{S13}} {\text{) = (x}}_{\text{S21}} {\text{+ x}}_{\text{S22}} {\text{+ x}}_{\text{S23}} {\text{) = 2x}}_{\text{S}} \text{.}$

Thus, a virtual total reflection plane **12** of an equivalent one-dimensional resonator can be defined, whereby the effective layer thickness **x**_{**S**} of the liquid **S** is constant versus lateral directions y and z and all layer dimensions again can be chosen according to the invention.

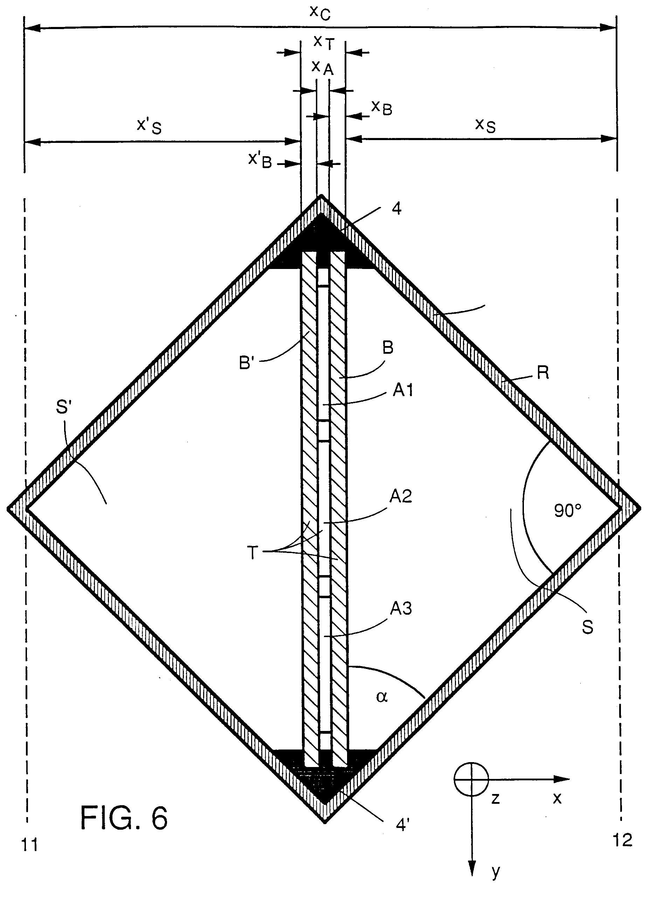

**FIG.6** is a preferred symmetric version of the resonator shown in **FIG.5**. The main advantage of this design is the use of a square cross section tube, whereby the tube walls simultaneously perform as walls for the liquid and as totally reflecting means for the composite resonator. Each of the thicknesses **x**_{**B**}, **x**_{**B'**} of the two passive layers **B**, **B'**, as well as the thickness **x**_{**A**} of the active layer **A**, are chosen according to the invention.

**FIG.7** shows a more detailed drawing of a composite transducer. The same drawing applies for an active mirror, which includes a piezoelectric layer **A** according to the invention. In the example shown in **FIG.7**, the piezoelectrically active layer **A** is represented by six piezoelectric plates **A1**, **A2**, **A3**, **A4**, **A5**, **A6**,which are of equal thickness **x**_{**A**}, arranged side by side and provided with electrodes. The plates are electrically connected in series to match the electrical impedance of the transducer to the output of the frequency generator **G**. Said generator **G** provides via the clamps **E1**, **E2,** the electrical excitation signal with a frequency fₑ. Uₑ and Iₑ are the amplitudes of the driving voltage and current, respectively. The plates are bonded upon an electrically insulating and piezoelectrically passive carrier plate **B** of a thickness **x**_{**B**}, such as glass or Al₂O₃-ceramic, and can be treated in good approximation as one continuous layer with a thickness **x**_{**A**}. The electrical connections between the piezoelectric plates are provided by copper films **I1**, **I2, I3, I4,** and by electrode layers **J1**, **J2**, **J3**, of a thickness **x**_{**E**}, which causes a phase shift φ_{E} of less than 1/16 of the number π. Said electrodes are deposited onto the surface of the passive carrier layer **B** next to the active layer **A**. The thicknesses **x**_{**A**} and **x**_{**B**} have defined values according to the invention in order to achieve low acoustically induced thermal dissipation. Best results can be achieved if the specific acoustic impedance Z_{B} of the passive layer is close to or higher than the specific acoustic impedance of the piezoelectrically active layer Z_{A}. The thickness **x**_{**A**} of the active layer is preferably close to or equal to a value, which causes a phase shift φ_{A} being an odd multiple m of the number π, the thickness **x**_{**B**} of the passive layer **B** is preferably close to or equal to a value, which causes a phase shift φ_{B} being an odd multiple n of half of the number π. An odd multiple q of passive sublayers **B1**, **B2**, **B3**, (or more) each of a thickness **x**_{**B,k**} (k = 1.....q) causing a phase shift φ_{B,k} as described above for a single passive layer **B** is also useful to lower energy dissipation. Said odd multiple of passive layers **Bk** are of alternating high (Z_{B,k} ≧ Z_{A}, k...odd) and low (Z_{B,k} < Z_{A}, k...even) specific acoustic impedance, but starting and ending with high ones in the range of Z_{A} of the active layer **A**. In a variation of this arrangement of passive sublayers **Bk**, low-impedance sublayers may also be a fluid.

## Claims

1. Method for treating a liquid, especially for separating dispersed particles from a liquid by means of applying a resonant ultrasonic sound field in a multilayered composite resonator, said acoustically coupled layers are formed in the propagation direction (x) of the acoustic wave by at least a piezoelectric transducer (T), a vessel containing the liquid (S), and an acoustic mirror (M), whereby said transducer (T) is driven by an electrical power generator (G) with a driving frequency (fₑ) within the range of the half-value bandwidths of a characteristic high overtone quasiharmonic composite resonance-frequency (f_{Cj}),of the composite resonator characterized in that the driving frequency (fₑ) is chosen outside of the half value bandwith of any of the electrically exitable Eigen-frequencies (f_{Ti}) of the transducer.

2. Method of claim 1, characterized in that the driving frequency (fₑ) is chosen so that it is outside of any of the intervalls defined between a lower limit value, which is defined as the regarded electrically excitable quasiharmonic Eigen-frequency of the transducer (f_{Ti}) minus the ratio (f_{Ti}/10i) of said Eigen-frequency (f_{Ti}) over ten times the quasiharmonic number (i), and a higher limit value, which is defined as said Eigen-frequency (f_{Ti}) plus the ratio (f_{Ti}/10i) of said Eigen-frequency (f_{Ti}) over ten times the quasiharmonic number (i).

3. Method of claim 1 or 2, characterized in that driving frequency (fₑ) is chosen in such way that the acoustic particle velocity amplitude (V) in the interface plane between the transducer (T) and the liquid (S) is small compared with the maximum amplitudes within the transducer and preferably about zero.

4. Apparatus for treating liquids, especially for separating dispersed particles from a liquid by means of applying a resonant ultrasonic sound field in a multilayered composite resonator, said acoustically coupled layers are formed in the propagation direction (x) of the acoustic wave by at least a piezoelectric transducer (T), a vessel containing the liquid (S), and an acoustic mirror (M), whereby said transducer (T) is adapted to be driven by an electrical power generator (G) with a driving frequency (fₑ) within the range of the half-value bandwidths of a characteristic high overtone quasiharmonic composite resonance-frequency (f_{Cj}), characterized in that the thickness (x_{T}) and relative position of the transducer (T) is chosen so that the transducer (T) is adapted to a driving frequency (fₑ) outside of the half value bandwith of any of the electrically exitable Eigen-frequencies (f_{Ti}) of the transducer.

5. Apparatus of claim 4, characterized in that the thickness (x_{T}) and relative position of the transducer layer (T) is chosen so that the driving frequency (fₑ) is outside of any of the intervalls defined between a lower limit value, which is defined as the regarded electrically excitable quasiharmonic Eigen-frequency of the transducer (f_{Ti}) minus the ratio (f_{Ti}/10i) of said Eigen-frequency (f_{Ti}) over ten times the quasiharmonic number (i), and a higher limit value, which is defined as said Eigen-frequency (f_{Ti}) plus the ratio (f_{Ti}/10i) of said Eigen-frequency (f_{Ti}) over ten times the quasiharmonic number (i).

6. Apparatus of claims 4 or 5, characterized in that the transducer (T) is in contact with the liquid (S) only at one side, the inner side, whereby the outer interface plane of the transducer (T) serves as first terminating reflecting plane (11) and the outer interface plane of the acoustic mirror (M) serves as second terminating reflecting plane (12) and that the transducer (T) preferably is comprised of a piezoelectric solid layer with electrodes, referred to as active layer (A), and a non-piezoelectric layer, referred to as passive layer (B), whereby
- the active layer is of a thickness (x_{A}), which causes a spatial phase shift (φ_{A}) of the acoustic particle velocity amplitude (V), said phase shift (φ_{A}) being close to equal to an odd multiple (m) of the number Pi (π),
- the passive layer (B) is of a thickness (x_{B}), which causes a spatial phase shift (φ_{B}) of the acoustic particle velocity amplitude (V), said phase shift (φ_{B}) being close to or equal to an odd multiple (n) of half of the number Pi (π), and
- the passive layer (B) is made of a material with a specific acoustic impedance Z_{B} preferrably close to, or higher than, the specific acoustic impedance Z_{A} of the active layer (A).

7. Apparatus of claims 4 or 5, characterized in that the transducer (T) is in contact with the liquid (S) at both sides and two separate mirrors (M, M') are terminating the resonator, whereby the outer interface plane of the first mirror (M) serves as first terminating reflecting plane (11) and the outer interface plane of the second mirror (M') serves as second terminating reflecting plane (12) and that the transducer preferably is comprised of one piezoelectric solid layer with electrodes, referred to as active layer (A), and two non-piezoelectric layers, referred to as passive layers (B, B'), whereby
- the active layer (A) is placed in between the two passive layers (B, B'),
- the active layer (A) is of a thickness (x_{A}), which causes a spatial phase shift (φ_{A}) of the acoustic particle velocity amplitude (V), said phase shift (φ_{A}) being close to or equal to an odd multiple (m) of the number Pi (π),
- the first passive layer (B) is of a thickness (x_{B}), which causes a first phase shift (φ_{B}) of an odd multiple (n) of half of the number Pi (π), and the second passive layer (B') is of a thickness (x'_{B}), which causes a second phase shift (φ'_{B}) of an odd multiple (n') of half of the number Pi (π), whereby the thicknesses (x_{B}, x'_{B}) of the passive layers (B, B') have preferably the same value, and
- said passive layers (B, B') are made of a material with a specific acoustic impedance Z_{B} preferrably close to, or higher than, the specific acoustic impedance Z_{A} of the active layer.

8. Apparatus of one of claims 4 to 7, characterized in that the mirror includes a piezoelectric solid layer with electrodes, referred to as active layer (A), and the amplitude of the electrical signal (Uₑ) produced between the electrodes of the active layer (A) is used as criterion for controlling the exciting frequency (fₑ) of the electrical power generator (G) towards the value of a quasiharmonic composite resonance frequency (f_{Cj}) in that the amplitude of the electrical signal (Uₑ) is maintained at a maximum value.

9. Apparatus of claim 8, characterized in that
- said active layer (A) of the mirror (M) is of a thickness (x_{A}), which causes a spatial phase shift (φ_{A}) of the acoustic particle velocity amplitude (V), said phase shift (φ_{A}) being close to or equal to an odd multiple (m) of the number Pi (π),
- the active layer (A) of the mirror (M) is acoustically coupled with a non-piezoelectric layer, referred to as passive layer (B), with a thickness (x_{B}) causing a phase shift (φ_{B}) of the acoustic particle velocity amplitude, said phase shift (φ_{B}) being close to or equal to an odd multiple (n) of half of the number Pi (π), and
- the passive layer (B) is made of a material with a specific acoustic impedance (Z_{B}) close to, or higher than, the specific acoustic impedance (Z_{A}) of the active layer;
whereby preferably said passive layer (B) of the mirror (M) forms one wall of the vessel.

10. Apparatus of one of claims 6 to 9, characterized in that said active layer (A) is formed by a mosaic like structure of piezoelectric plates (A1, A2, A3, A4, A5, A6) of circular, rectangular or quadratic shape and of identical thickness (x_{A}) bonded upon the piezoelectrically passive layer (B).

11. Apparatus of claim 10, characterized in that said passive layer (B) is an electrically insulating dielectric layer and the electrodes of the piezoelectric plates (A1, A2, A3, A4, A5, A6) are at least in part electrically connected in series by connecting electrode layers (J1, J2, J3) which are deposited onto the passive layer (B), said connecting electrode layers (J1, J2, J3) are made of a thickness (x_{E}) corresponding to a spatial phase shift (φ_{E}) of the acoustic particle velocity amplitude (V) smaller than 1/16 of the number Pi (π).

12. Apparatus of one of claims 6 to 11, characterized in that said piezoelectrically passive layer (B) consists of an odd multiple (q) of passive sublayers, whereby
- the thickness (x_{B,k} [k = 1.....q]) of each sublayer causes a spatial phase shift (φ_{B}) of the acoustic particle velocity amplitude (V), said phase shift (φ_{B}) being close to or equal to an odd multiple (nₖ) of half of the number Pi (π), and
- said odd multiple of passive layers are of alternating high and low acoustic impedance, but starting and ending with high values preferrably close to or higher than the specific acoustic impedance (Z_{A}) of the active layer (A).

13. Apparatus of one of claims 4 to 12, characterized in that the fine tuning of the exciting frequency (fₑ) of the electrical power generator (G) towards the value of the quasi-harmonic composite resonance frequency f_{Cj} is made by an automatic frequency control (AFC), which utilizes the root mean square power consumption (Pₑ) of the composite resonator as criterion for controlling, whereby the root mean square power consumption (Pₑ) is maintained at a relative maximum value.

14. Apparatus of one of claims 6 to 13, characterized in that an additional wave guide layer (W), consisting of a fluid, is placed between the passive layer (B) of the transducer (T) and the liquid (S), and such waveguide layer is separated from the liquid (S) by an acoustically transparent wall (F) and that preferably the side walls of the wave guide layer (W) are equipped with an entrance and exit pipe for circulating the fluid.

15. Apparatus of claim 14, characterized in that the tuning of the excitation frequency (fₑ) is switched repeatedly between, five to twelve, adjacent, closely-spaced composite resonance frequencies f_{Cj}.

16. Apparatus of claim 14, characterized in that the acoustically transparent wall (F) with thickness (x_{F}) producing a spatial phase shift (ϕ_{F}) of the acoustic particle velocity amplitude (V), which is much smaller than the half of the number Pi (π) for the excitation frequency (fₑ) or which is approximately equal to the number Pi (π) for the excitation frequency (fₑ).

17. Apparatus of claim 14, characterized in that the acoustically transparent wall (F) is made of a material with an specific acoustic impedance (Z_{F}) which is very close to specific acoustic impedance (Z_{W}) of the waveguide fluid (W).

18. Apparatus of one of claims 4 to 17, characterized in that
- a totally reflecting retro-reflector (R) forms one wall of the vessel, such retro-reflector (R) being formed by two plates (12', 12'') at right angle to each other and tilted by 45° to the direction (x) of sound propagation,
- the acoustic parameters of the material of the retro-reflector (R) being of a value that the total reflection condition at the interface between liquid (S) and reflector (R) is fulfilled for the tilt-angle between the reflector plates (12', 12") and the longitudinal direction (x) being equal 45°, and
- the flow of the liquid being oriented parallel to these plates (12', 12") and perpendicular (z) to the longitudinal direction (x), whereby
- the virtual total reflection plane (12) of the equivalent one-dimensional resonator defines the effective layer thickness (x_{S}) of the liquid (S).

19. Apparatus of one of claims 4 to 17, characterized in that two symmetric, totally reflecting retro-reflectors (R, R') form opposite walls of the vessel, the acoustic parameters of the material of the retro-reflectors (R, R') being of a value that the total reflection condition at the interfaces between the respective liquids (S, S') and reflectors (R, R') is fulfilled, and the flow of the liquids (S, S') being oriented perpendicular (z) to the longitudinal direction (x), whereby the virtual total reflection planes (11, 12) of the equivalent one-dimensional resonator define the effective layer thicknesses (x_{S}, x'_{S}) of the liquids (S, S') .

20. Apparatus of one of claims 4 to 17, characterized in that the thickness (x_{M})of the mirror (M) is chosen to cause a phase shift (φ_{M}) of the acoustic particle velocity amplitude, said phase shift (φ_{M}) being close to or equal to an odd multiple (n) of half of the number Pi (π).

## Patentansprüche

1. Verfahren zur Behandlung einer Flüssigkeit, insbesondere zur Trennung dispergierter Partikel von einer Flüssigkeit durch Anlegen eines resonanten Ultraschallfeldes in einem zusammengesetzten Resonanzkörper, wobei die akustisch gekoppelten Schichten in der Ausbreitungsrichtung (x) der akustischen Welle durch mindestens einen piezoelektrischen Wandler (T), ein Gefäß mit der Flüssigkeit (S) und einen akustischen Spiegel (M) gebildet werden und wobei der Wandler (T) von einem elektrischen Stromgenerator (G) mit einer Steuerfrequenz (fₑ) innerhalb des Bereichs der Halbwertsbandbreiten einer quasiharmonischen, zusammengesetzten Oberschwingungs-Frequenz (f_{Cj}) des zusammengesetzten Resonanzkörpers betrieben wird, dadurch gekennzeichnet, daß die Steuerfrequenz (fₑ) außerhalb der Halbwertsbandbreite jeder der elektrisch erregbaren Eigenfrequenzen (f_{Ti}) des Wandlers gewählt wird.

2. Verfahren gemäß Anspruch 1, dadurch gekennzeichnet, daß die Steuerfrequenz (fₑ) so gewählt wird, daß sie außerhalb jedes der Intervalle liegt, die definiert sind zwischen einem unteren Grenzwert, der definiert ist als die betrachtete, elektrisch erregbare quasiharmonische Eigenfrequenz des Wandlers (f_{Ti}) minus dem Verhältnis (f_{Ti}/10i) der Eigenfrequenz (f_{Ti}) durch zehn mal die quasiharmonische Zahl (i), und einem oberen Grenzwert, der definiert ist als die Eigenfrequenz (fTi) plus dem Verhältnis (fTi/10i) der Eigenfrequenz (fTi) durch zehn mal die quasiharmonische Zahl (i).

3. Verfahren von Anspruch 1 oder 2, dadurch gekennzeichnet, daß die Steuerfrequenz (fe) so ausgewählt wird, daß die Teilchenschnelleamplitude (V) in der Schnittstellenebene zwischen dem Wandler (T) und der Flüssigkeit (S) im Vergleich zu den Maximalamplituden innerhalb des Wandlers gering und vorzugsweise etwa null ist.

4. Vorrichtung zur Behandlung von Flüssigkeiten, insbesondere zur Trennung dispergierter Partikel von einer Flüssigkeit durch Anlegen eines resonanten Ultraschallfeldes in einem mehrschichtigen, zusammengesetzten Resonator, wobei die akustisch gekoppelten Schichten in der Ausbreitungsrichtung (x) der akustischen Welle durch mindestens einen piezoelektrischen Wandler (T), ein Gefäß mit der Flüssigkeit (S) und einen akustischen Spiegel (M) gebildet werden und wobei der Wandler (T) geeignet ist, von einem elektrischen Stromgenerator (G) mit einer Steuerfrequenz (fe) innerhalb des Bereichs der Halbwertsbandbreiten einer quasiharmonischen, zusammengesetzten Oberschwingungs-Resonanz-Frequenz (fCj) gesteuert zu werden, dadurch gekennzeichnet, daß die Dicke (xT) und die relative Position des Wandlers (T) so gewählt werden, daß der Wandler (T) an eine Steuerfrequenz (fe) außerhalb der Halbwertsbandbreite jeder der elektrisch erregbaren Eigenfrequenzen (fTi) des Wandlers angepaßt ist.

5. Vorrichtung nach Anspruch 4, dadurch gekennzeichnet, daß die Dicke (xT) und relative Position der Wandlerschicht (T) so gewählt wird, daß die Steuerfrequenz (fe) außerhalb jedes der Intervalle liegt, die definiert sind zwischen einem unteren Grenzwert, der definiert ist als die betrachtete elektrisch erregbare quasiharmonische Eigenfrequenz des Wandlers (fTi) minus dem Verhältnis (fTi/10i) der Eigenfrequenz (fTi ) durch zehn mal die quasiharmonische Zahl (i), und einem oberen Grenzwert, der definiert ist als die Eigenfrequenz (fTi) plus dem Verhältnis (fTi/10i) der Eigenfrequenz (fTi) durch zehn mal die quasiharmonische Zahl (i).

6. Vorrichtung der Ansprüche 4 oder 5, dadurch gekennzeichnet, daß der Wandler (T) mit der Flüssigkeit (S) nur ein einer Seite, der Innenseite, in Kontakt ist, wobei die äußere Schnittstellenebene des Wandlers (T) als erste abschließende Reflexionsebene (11) dient und die äußere Schnittstellenebene des akustischen Spiegels (M) als zweite abschließende Reflexionsebene (12) dient, und des weiteren, daß der Wandler (T) vorzugsweise aus einer piezoelektrischen, festen Schicht mit Elektroden besteht, die als aktive Schicht (A) bezeichnet wird, und aus einer nicht-piezoelektrischen Schicht, die als passive Schicht (B) bezeichnet wird, wobei
• die aktive Schicht eine Dicke (x_{A}) aufweist, die eine räumliche Phasenverschiebung (φ_{A}) der Teilchenschnellenamplitude (V) verursacht, wobei die Phasenverschiebung (φ_{A}) nahe oder gleich einem ungeraden Vielfachen (m) der Zahl Pi (π) ist,
• die passive Schicht (B) eine Dicke (x_{B}) aufweist, die eine räumliche Phasenverschiebung (φ_{B}) der Teilchenschnellenamplitude (V) verursacht, wobei die Phasenverschiebung (φ_{B}) nahe oder gleich einem ungeraden Vielfachen (n) der Zahl Pi (π) ist, und
• die passive Schicht (B) aus einem Material mit einer spezifischen akustischen Impedanz Z_{B} besteht, die vorzugsweise nahe der oder höher als die spezifische akustische Impedanz Z_{A} der aktiven Schicht (A) ist.

7. Vorrichtung der Ansprüche 4 oder 5, dadurch gekennzeichnet, daß der Wandler (T) zu beiden Seiten in Kontakt mit der Flüssigkeit (S) ist und zwei getrennte Spiegel (M, M') den Resonanzkörper abschließen, wobei die äußere Schnittstellenebene des ersten Spiegels (M) als erste abschließende Reflexionsebene (11) und die äußere Schnittstellenebene des zweiten Spiegels (M') als zweite abschließende Reflexionsebene (12) dient und daß der Wandler vorzugsweise aus einer piezoelektrischen festen Schicht mit Elektroden besteht, die als aktive Schicht (A) bezeichnet wird, und aus zwei nicht-piezoelektrischen Schichten, die als passive Schichten (B, B') bezeichnet werden, wobei
• die aktive Schicht (A) zwischen den beiden passiven Schichten (B, B') angeordnet ist,
• die aktive Schicht (A) eine Dicke (x_{A}) aufweist, die eine räumliche Phasenverschiebung (φ_{A}) der Teilchenschnellenamplitude (V) verursacht, wobei die Phasenverschiebung (φ_{A}) nahe oder gleich einem ungeraden Vielfachen (m) der Zahl Pi (π) ist,
• die erste passive Schicht (B) eine Dicke (x_{B}) aufweist, die eine erste Phasenverschiebung (φ_{B}) eines ungeraden Vielfachen (n) des halben Werts der Zahl Pi (π) verursacht, und die zweite passive Schicht (B') ist von einer Dicke (x'_{B}), die eine zweite Phasenverschiebung (φ'_{B}) eines ungeraden Vielfachen (n') des halben Werts der Zahl Pi (π) verursacht, wobei die Dicken (x_{B}, x'_{B}) der passiven Schichten (B, B') vorzugsweise denselben Wert aufweisen, und
• die passiven Schichten (B, B') aus einem Material mit einer spezifischen akustischen Impedanz Z_{B} gefertigt sind, die vorzugsweise nahe oder höher als die spezifische akustische Impedanz Z_{A} der aktiven Schicht ist.

8. Vorrichtung eines der Ansprüche 4 bis 7, dadurch gekennzeichnet, daß der Spiegel eine piezoelektrische feste Schicht mit Elektroden umfaßt, die als aktive Schicht (A) bezeichnet wird, und die zwischen den Elektroden der aktiven Schicht (A) produzierte Amplitude des elektrischen Signals (Uₑ) als Kriterium zur Steuerung der Erregerfrequenz (fₑ) des elektrischen Stromgenerators (G) gegen den Wert einer quasiharmonischen zusammengesetzten Resonanzfrequenz (f_{Cj}) hin verwendet wird, indem die Amplitude des elektrischen Signals (Uₑ) auf einem Maximalwert gehalten wird.

9. Vorrichtung von Anspruch 8, dadurch gekennzeichnet, daß
• die aktive Schicht (A) des Spiegels (M) eine Dicke (x_{A}) aufweist, die eine räumliche Phasenverschiebung (φ_{A}) der Teilchenschnellenamplitude (V) verursacht, wobei die Phasenverschiebung (φ_{A}) nahe oder gleich einem ungeraden Vielfachen (m) der Zahl Pi (π) ist,
• die aktive Schicht (A) des Spiegels (M) akustisch gekoppelt ist mit einer nicht-piezoelektrischen Schicht, die als passive Schicht (B) bezeichnet wird und welche eine Dicke (x_{B}) aufweist, die eine Phasenverschiebung (φ_{B}) der Teilchenschnellenamplitude verursacht, wobei die Phasenverschiebung (φ_{B}) nahe oder gleich einem ungeraden Vielfachen (n) der Hälfte des Werts der Zahl Pi (π) ist, und
• die passive Schicht (B) aus einem Material mit einer spezifischen akustischen Impedanz (Z_{B}) gefertigt ist, die nahe der oder höher als die spezifische akustische Impedanz (Z_{A}) der aktiven Schicht ist;
wobei vorzugsweise die passive Schicht (B) des Spiegels (M) eine Wand des Gefäßes bildet.

10. Vorrichtung eines der Ansprüche 6 bis 9, dadurch gekennzeichnet, daß die aktive Schicht (A) durch eine mosaikartige Struktur aus piezoelektrischen Platten (A1, A2, A3, A4, A5, A6) von runder, rechteckiger oder quadratischer Form und identischer Dicke (x_{A}) gebildet ist, die an der piezoelektrisch passiven Schicht (B) befestigt sind.

11. Vorrichtung nach Anspruch 10, dadurch gekennzeichnet, daß die passive Schicht (B) eine elektrisch isolierende, dielektrische Schicht ist und die Elektroden der piezoelektrischen Platten (A1, A2, A3, A4, A5, A6) zumindest teilweise durch die verbindenden Elektrodenschichten (J1, J2, J3) in Serie elektrisch verbunden sind, die auf der passiven Schicht (B) abgeschieden sind, wobei die verbindenden Elektrodenschichten (J1, J2, J3) in einer Dicke (xE) gefertigt sind, die einer räumlichen Phasenverschiebung (φE) der Teilchenschnellenamplitude (V) entsprechen, die kleiner als 1/16 der Zahl Pi (π) ist.

12. Vorrichtung nach einem der Ansprüche 6 bis 11, dadurch gekennzeichnet, daß die piezoelektrisch passive Schicht (B) aus einer ungeraden Mehrzahl (q) von passiven Teilschichten besteht, wobei
• die Dicke (x_{B,k} [k = 1....q]) jeder Teilschicht eine räumliche Phasenverschiebung (φ_{B}) der Teilchenschnellenamplitude (V) verursacht, wobei die Phasenverschiebung (φ_{B}) nahe oder gleich einem ungeraden Vielfachen (nₖ) des halben Werts der Zahl Pi (π) ist, und
• die ungerade Mehrzahl von passiven Schichten von alternierend hoher und niedriger akustischer Impedanz sind, aber mit hohen Werten beginnen und enden, die vorzugsweise nahe der oder höher als die spezifische akustische Impedanz (Z_{A}) der aktiven Schicht (A) sind.

13. Vorrichtung nach einem der Ansprüche 4 bis 12, dadurch gekennzeichnet, daß die Feinabstimmung der Erregerfrequenz (fe) des elektrischen Stromgenerators (G) gegen den Wert der quasiharmonischen zusammengesetzten Resonanzfrequenz fCj durch eine automatische Frequenzkontrolle (AFC) erfolgt, welche den Effektiv-Energieverbrauch (Pe) des zusammengesetzten Resonanzkörpers als Kriterium zur Regelung verwendet, wobei der Effektiv-Energieverbrauch (Pe) auf einem relativen Maximalwert gehalten wird.

14. Vorrichtung nach einem der Ansprüche 6 bis 13, dadurch gekennzeichnet, daß eine zusätzliche Wellen-Leiter-Schicht (W), bestehend aus einer Flüssigkeit, zwischen der passiven Schicht (B) des Wandlers (T) und der Flüssigkeit (S) angeordnet ist und solche Wellen-Leiter-Schicht von der Flüssigkeit (S) getrennt ist durch eine akustisch transparente Wand (F) und daß vorzugsweise die Seitenwände der Wellen-Leiter-Schicht (W) mit einem Eingangs- und einem Ausgangsrohr zur Zirkulation der Flüssigkeit versehen sind.

15. Vorrichtung nach Anspruch 14, dadurch gekennzeichnet, daß die Abstimmung der Erregerfrequenz (fe) wiederholt zwischen fünf bis zwölf benachbarten, eng beabstandeten, zusammengesetzten Resonanzfrequenzen fCj gewechselt wird.

16. Vorrichtung nach Anspruch 14, dadurch gekennzeichnet, daß die akustisch transparente Wand (F) mit der Dicke (xF) eine räumliche Phasenverschiebung (ϕF) der Teilchenschnellenamplitude (V) produziert, die viel geringer ist als die Hälfte der Zahl Pi (π) für die Erregerfrequenz (fe) oder die annähernd gleich der Zahl Pi (π) für die Erregerfrequenz (fe) ist.

17. Vorrichtung nach Anspruch 14, dadurch gekennzeichnet, daß die akustisch transparente Wand (F) aus einem Material mit einer spezifischen akustischen Impedanz (ZF) besteht, die sehr nahe an der spezifischen akustischen Impedanz (ZW) der Wellenleiterflüssigkeit (W) liegt.

18. Vorrichtung nach einem der Ansprüche 4 bis 17, dadurch gekennzeichnet, daß
• ein totalreflektierender Retroreflektor (R) eine Wand des Gefäßes bildet, wobei der Retroreflektor (R) aus zwei Platten (12', 12'') besteht, die im rechten Winkel zueinander angeordnet und 45° zu der Richtung (x) der Schallausbreitung geneigt sind,
• die akustischen Parameter des Materials des Retrofeflektors (R) einen Wert haben, daß die Totalreflexionsbedingung an der Schnittstelle zwischen Flüssigkeit (S) und Reflektor (R) für den Neigungswinkel zwischen den Reflektorplatten (12', 12'') und der Längsrichtung (x) gleich 45° erfüllt ist, und
• die Strömung der Flüssigkeit parallel zu diesen Platten (12', 12'') und im rechten Winkel (z) zur Längsrichtung (x) orientiert ist, wobei
• die virtuelle Totalreflexionsebene (12) des äquivalenten eindimensionalen Resonanzkörpers die effektive Schichtdicke (x₅) der Flüssigkeit (S) definiert.

19. Vorrichtung nach einem der Ansprüche 4 bis 17, dadurch gekennzeichnet, daß zwei symmetrische, totalreflektierende Retroreflektoren (R, R') gegenüberliegende Wände des Gefäßes bilden, wobei die akustischen Parameter des Materials der Retroreflektoren (R, R') einen Wert haben, daß die Totalreflexionsbedingung an den Schnittstellen zwischen den jeweiligen Flüssigkeiten (S, S') und Reflektoren (R, R') erfüllt ist, und daß die Strömung der Flüssigkeiten (S, S') im rechten Winkel (z) zur Längsrichtung (x) ausgerichtet ist, wobei die virtuellen Totalreflexionsebenen (11, 12) des äquivalenten eindimensionalen Resonanzkörpers die effektiven Schichtdicken (x₅, x'ₛ) der Flüssigkeiten (S, S') definieren.

20. Vorrichtung nach einem der Ansprüche 4 bis 17, dadurch gekennzeichnet, daß die Dicke (x_{M}) des Spiegels (M) so ausgewählt ist, daß sie eine Phasenverschiebung (φ_{M}) der Teilchenschnellenamplitude verursacht, wobei die Phasenverschiebung (φ_{M}) nahe einem oder gleich einem ungeraden Vielfachen (n) der Hälfte der Zahl Pi (π) ist.

## Revendications

1. Procédé pour traiter un liquide et, en particulier pour séparer des particules dispersées d'un liquide au moyen de l'application d'un champ acoustique ultrasonique résonnant dans un résonateur composite multicouches, dans lequel lesdites couches couplées acoustiquement sont formées dans la direction de propagation (x) de l'onde acoustique et constituées par au moins un transducteur piézo-électrique (T), un récipient contenant le liquide (S) et un miroir acoustique (M), ledit transducteur (T) étant alimenté par un générateur (G) de courant électrique avec une fréquence d'alimentation (fₑ) dans la plage des largeurs de bande à mi-valeur d'une fréquence de résonance composite quasi-harmonique supérieure caractéristique (f_{Cj}) du résonateur composite, caractérisé en ce que la fréquence d'alimentation (fₑ) est choisie en-dehors de la largeur de bande à mi-valeur d'une quelconque des fréquences propres (f_{Ti}) excitables électriquement du transducteur.

2. Procédé selon la revendication 1, caractérisé en ce que la fréquence d'alimentation (fₑ) est choisie de manière à être à l'extérieur d'un quelconque des intervalles définis entre une valeur limite inférieure, qui est définie comme étant la fréquence propre quasi-harmonique excitable électriquement du transducteur (f_{Ti}) moins le rapport (f_{Ti}/10i) de ladite fréquence propre (f_{Ti}) sur dix fois le nombre quasi-harmonique (i) et a une valeur limite supérieure, qui est définie comme étant ladite fréquence propre (f_{Ti}) plus le rapport (f_{Ti}/10i) de la fréquence propre (f_{Ti}) sur dix fois le nombre quasiharmonique (i).

3. Procédé selon la revendication 1 ou la revendication 2, caractérisé en ce que la fréquence d'alimentation (f_{c}) est choisie de manière à ce que l'amplitude de la vitesse (V) des particules acoustiques dans le plan de l'interface entre le transducteur (T) et le liquide (S) soit petite par comparaison avec les amplitudes maximales dans le transducteur et, de préférence, d'environ zéro.

4. Appareil pour traiter des liquides, en particulier pour séparer les particules dispersées d'un liquide au moyen de l'application d'un champ acoustique ultrasonique résonnant dans un résonateur composite multicouches, dans lequel lesdites couches couplées acoustiquement sont formées dans la direction de propagation (x) de l'onde acoustique et constituées par au moins un transducteur piézo-électrique (T), un récipient contenant le liquide (S) et un miroir acoustique (M), ledit transducteur (T) étant agencé pour être alimenté par un générateur de courant électrique (G) avec une fréquence d'alimentation (fₑ) à l'intérieur de la plage des largeurs de bande à mi-valeur d'une fréquence de résonance composite quasiharmonique haute (f_{Cj}), caractérisé en ce que l'épaisseur (x_{T}) et la position relative du transducteur (T) sont choisies de manière à ce que le transducteur (T) soit adapté à la fréquence d'alimentation (fₑ) à l'extérieur de la largeur de bande à mi-valeur d'une quelconque des fréquences propres excitables électriquement (f_{Ti}) du transducteur.

5. Appareil selon la revendication 4, caractérisé en ce que l'épaisseur (x_{T}) et la position relative de la couche du transducteur (T) sont choisies de manière à ce que la fréquence d'alimentation (fₑ) soit en dehors d'un quelconque des intervalles définis entre une valeur limite inférieure, qui est définie comme étant la fréquence propre quasi-harmonique électriquement excitable considérée (f_{Ti}) du transducteur moins le rapport (f_{Ti}/10i) de ladite fréquence propre (f_{Ti}) sur dix fois le nombre quasi-harmonique (i), et une limite supérieure, qui est définie comme étant ladite fréquence propre (f_{Ti}) plus le rapport (f_{Ti}/10i) de ladite fréquence propre (f_{Ti}) sur dix fois ledit nombre quasi-harmonique (i).

6. Appareil selon la revendication 4 ou 5, caractérisé en ce que le transducteur (T) est en contact avec le liquide (S) sur un côté seulement, le côté interne, le plan d'interface externe du transducteur (T) servant de premier plan de réflexion d'extrémité (11) et le plan d'interface externe du miroir acoustique (M) servant de second plan réfléchissant d'extrémité (12) et en ce que le transducteur (T) comprend, de préférence, une couche piézo-électrique solide avec des électrodes, appelée couche active (A) et une couche non piézo-électrique, appelée couche passive (B), et dans lequel :
- la couche active a une épaisseur (x_{A}) qui provoque un décalage de phase spatial (φ_{A}) de l'amplitude de la vitesse (V) des particules acoustiques, ledit décalage de phase (φ_{A}) étant proche d'un multiple impair (m) du nombre Pi (π) ou égal à celui-ci,
- la couche passive (B) a une épaisseur (x_{B}) qui provoque un décalage de phase spatial (φ_{B}) de l'amplitude de la vitesse (V) des particules acoustiques, ledit décalage de phase (φ_{B}) étant proche d'un multiple impair (n) de la moitié du nombre Pi (π) ou égal à celui-ci, et
- la couche passive (B) est faite en un matériau avec une impédance acoustique spécifique Z_{B} qui est, de préférence, proche de l'impédance acoustique spécifique Z_{A} de la couche active (A) ou supérieure à celle-ci.

7. Appareil selon la revendication 4 ou la revendication 5, caractérisé en ce que le transducteur (T) est en contact avec le liquide (S) sur les deux côtés et que deux miroirs séparés (M, M') sont aux extrémités du résonateur, le plan d'interface externe du premier miroir (M) servant de premier plan d'extrémité réfléchissant (11) et le plan d'interface externe du second miroir (M') servant de second plan d'extrémité réfléchissant (12) et en ce que le transducteur est constitué, de préférence, d'une couche piézo-électrique solide avec des électrodes, appelée couche active (A) et de deux couches non piézo-électriques appelées couches passives (B, B'), dans lequel :
- la couche active (A) est placée entre les deux couches passives (B, B'),
- la couche active (A) a une épaisseur (x_{A}) qui provoque un décalage de phase spatial (φ_{A}) de l'amplitude de la vitesse (V) des particules acoustiques, ledit décalage de phase (φ_{A}) étant proche d'un multiple impair (m) du nombre Pi (π) ou égal à celui-ci,
- la première couche passive (B) a une épaisseur (x_{B}) qui provoque un premier décalage de phase (φ_{B}) d'un multiple impair (n) de la moitié du nombre Pi (π) et la seconde couche passive (B') a une épaisseur (x'_{B}) qui provoque un second décalage de phase (φ'_{B}) d'un multiple impair (n') de la moitié du nombre Pi (π), l'épaisseur (x_{B}, x'_{B}) des couches passives (B, B') ayant, de préférence, la même valeur, et
- lesdites couches passives (B, B') sont faites en un matériau avec une impédance acoustique spécifique Z_{B} qui est, de préférence, proche de l'impédance acoustique spécifique Z_{A} de la couche active ou supérieure à celle-ci.

8. Appareil selon l'une des revendications 4 à 7, caractérisé en ce que le miroir comprend une couche piézo-électrique solide avec des électrodes, appelée couche active (A), que l'amplitude du signal électrique (Uₑ) produit entre les électrodes de la couche active (A) est utilisée comme critère pour l'ajustement de la fréquence d'excitation (f_{c}) du générateur de courant électrique (G) sur la valeur d'une fréquence de résonance composite quasi-harmonique (f_{Cj}) et que l'amplitude du signal électrique (Uₑ) est maintenue à une valeur maximale.

9. Appareil selon la revendication 8, caractérisé en ce que :
- ladite couche active (A) du miroir (M) a une épaisseur (x_{A}) qui provoque un décalage de phase spatial (φ_{A}) de l'amplitude de la vitesse (V) des particules acoustiques, ledit décalage de phase (φ_{A}) étant proche d'un multiple impair (m) du nombre Pi (π), ou égal à celui-ci,
- la couche active (A) du miroir (M) est couplée acoustiquement avec une couche non piézo-électrique, appelée couche passive (B) avec une épaisseur (x_{B}), provoquant un décalage de phase (φ_{B}) de I'amplitude de la vitesse des particules acoustiques, ledit décalage de phase (φ_{B}) étant proche d'un multiple impair (n) de la moitié du nombre Pi (π) ou égal à celui-ci et
- la couche passive (B) est faite en un matériau avec une impédance acoustique spécifique (Z_{B}) proche de l'impédance acoustique spécifique (Z_{A}) de la couche active, ou supérieure à celle-ci ;
ladite couche passive (B) du miroir (M) formant, de préférence, une paroi du récipient.

10. Appareil selon l'une des revendications 6 à 9, caractérisé en ce que ladite couche active (A) est formée par une structure du type mosaïque de plaques piézo-électriques (A1, A2, A3, A4, A5, A6) ayant une forme circulaire, rectangulaire ou quadratique et une épaisseur identique (x_{A}), liées sur la couche (B) passive du point de vue piézo-électrique.

11. Appareil selon la revendication 10, caractérisé en ce que ladite couche passive (B) est une couche diélectrique isolante sur le plan électrique et les électrodes des plaques piézo-électriques (A1, A2, A3, A4, A5, A6) sont connectées électriquement au moins partiellement en série par des couches (JI, J2, J3) d'électrodes de connexion qui sont déposées sur la couche passive (B), lesdites couches d'électrodes de connexion (JI, J2, J3) sont réalisées avec une épaisseur (x_{E}) correspondant à un décalage de phase spatial (φ_{E}) de l'amplitude de la vitesse (V) des particules acoustiques plus petit qu'un seizième du nombre Pi (π).

12. Appareil selon l'une des revendications 6 à 11, caractérisé en ce que ladite couche piézo-électrique passive (B) est constituée par un multiple impair (q) de sous-couches passives, dans lequel :
- l'épaisseur (x_{B,k} [k = 1 ... q]) de chaque sous-couche provoque un décalage de phase spatial (φ_{B}) de l'amplitude de la vitesse (V) des particules acoustiques, ledit décalage de phase (φ_{B}) étant proche d'un multiple impair (nₖ) de la moitié du nombre Pi (π) ou égal à celui-ci, et
- lesdites couches passives, présentes en un nombre égal à un multiple impair ont, de manière alternée, une impédance acoustique élevée et basse, en commençant et en terminant toutefois et de préférence avec des valeurs hautes proches de l'impédance acoustique spécifique (Z_{A}) de la couche active (A) ou plus élevées que celle-ci.

13. Appareil selon l'une des revendications 4 à 12, caractérisé en ce que l'ajustement fin de la fréquence d'excitation (fₑ) du générateur de courant électrique (G) sur la valeur de la fréquence de résonance composite quasiharmonique f_{Cj} est fait par une commande de fréquence automatique (CFA) qui utilise la moyenne quadratique de la puissance (P₂) consommée par le résonateur composite comme critère pour la commande, la moyenne quadratique de la puissance consommée (Pₑ) étant maintenue à une valeur maximale relative.

14. Appareil selon l'une des revendications 6 à 13, caractérisé en ce qu'une couche de guide d'onde additionnelle (W) constituée d'un fluide, est placée entre la couche passive (B) du transducteur (T) et le liquide (S), qu'une telle couche guide d'ondes est séparée du liquide (S) par une paroi acoustiquement transparente (F) et que les parois latérales de la couche guide d'ondes (W) sont pourvues, de préférence, d'une conduite d'entrée et d'une conduite de sortie pour faire circuler le fluide.

15. Appareil selon la revendication 14, caractérisé en ce que l'ajustement de la fréquence d'excitation (fₑ) est réalisée de manière répétée par commutation entre cinq à douze fréquences de résonance f_{Cj} composites adjoignantes et étroitement groupées.

16. Appareil selon la revendication 14, caractérisé en ce que la paroi acoustiquement transparente (F) ayant l'épaisseur (x_{F}) produit un décalage de phase spatial (ϕ_{F}) de l'amplitude de la vitesse (V) des particules acoustiques, qui est beaucoup plus petit que la moitié du nombre Pi (π) pour la fréquence d'excitation (fₑ) ou qui est approximativement égal au nombre Pi (π) pour la fréquence d'excitation (fₑ).

17. Appareil selon la revendication 14, caractérisé en ce que la paroi acoustiquement transparente (F) est faite en un matériau avec une impédance acoustique spécifique (Z_{F}) qui est très proche de l'impédance acoustique spécifique (Z_{W}) du fluide (W) du guide d'ondes.

18. Appareil selon l'une des revendications 4 à 17, caractérisé en ce que :
- un rétro-réflecteur (R) à réflexion totale forme une paroi du récipient, ce rétro-réflecteur (R) étant formé par deux plaques (12', 12'') disposées mutuellement à l'angle droit et inclinées à 45 ° par rapport à la direction (x) de la propagation du son,
- les paramètres acoustiques du matériau du rétro-réflecteur (R) ayant une valeur telle que les conditions de réflexion totale à l'interface entre le liquide (S) et le réflecteur (R) soient satisfaites pour un angle d'inclinaison entre les plaques réfléchissantes (12', 12'') et la direction longitudinale (x) de 45 ° et
- l'écoulement du liquide est orienté parallèlement à ces plaques (12', 12'') et perpendiculairement (z) à la direction longitudinale (x),
le plan virtuel de réflexion totale (12) du résonateur monodimensionnel équivalent définissant l'épaisseur effective (x_{S}) de la couche du liquide (S).

19. Appareil selon l'une des revendications 4 à 17, caractérisé en ce que les deux rétro-réflecteurs (R, R') symétriques et totalement réfléchissants forment des parois opposées du récipient, les paramètres acoustiques du matériau des rétro-réflecteurs (R, R') ayant des valeurs telles que des conditions de réflexion totale aux interfaces entre les liquides respectifs (S, S') et les réflecteurs (R, R') soient satisfaites et que l'écoulement des liquides (S, S') soit orienté perpendiculairement (z) à la direction longitudinale (x), les plans virtuels de réflexion totale (11, 12) du résonateur monodimensionnel équivalent définissant les épaisseurs effectives (x_{S}, x'_{S}) de couches des liquides (S, S' ).

20. Appareil selon l'une des revendications 4 à 17, caractérisé en ce que l'épaisseur (x_{M}) du miroir (M) est choisie pour provoquer un décalage de phase (φ_{M}) de l'amplitude de la vitesse des particules acoustiques, ledit décalage de phase (φ_{M}) étant proche d'un multiple impair (n) de la moitié du nombre Pi (π) ou égal à celui-ci.
